Europäisches Patentamt

European Patent Office

Office européen des brevets

(11) Veröffentlichungsnummer: **0 254 242**
B1

# EUROPÄISCHE PATENTSCHRIFT

(45) Veröffentlichungstag der Patentschrift:
24.10.90

(21) Anmeldenummer: 87110436.0

(22) Anmeldetag: 18.07.87

(51) Int. Cl.⁵: **B60S 1/36**

(54) Scheibenwischeranlage, insbesondere für Kraftfahrzeuge.

(30) Priorität: 22.07.86 DE 3624715

(43) Veröffentlichungstag der Anmeldung:
27.01.88 Patentblatt 88/4

(45) Bekanntmachung des Hinweises auf die Patenterteilung:
24.10.90 Patentblatt 90/43

(84) Benannte Vertragsstaaten:
ES FR GB IT

(56) Entgegenhaltungen:
EP-A- 0 075 521
DE-A- 3 447 438
FR-A- 2 548 605
US-A- 4 418 440

(73) Patentinhaber: SWF Auto-Electric GmbH, Stuttgarter Strasse 119 Postfach 135,
D-7120 Bietigheim-Bissingen(DE)

(72) Erfinder: Egner-Walter, Bruno, Käferflugstrasse 43,
D-7100 Heilbronn(DE)
Erfinder: Schmid, Eckhardt, Hellbronner Strasse 62,
D-7129 Brackenheim(DE)
Erfinder: Scholl, Wolfgang, Forststrasse 29,
D-7121 Gemmrigheim(DE)

## Beschreibung

Die Erfindung bezieht sich auf eine Scheibenwischeranlage gemäß den Merkmalen des Oberbegriffes des Anspruchs 1.

Eine solche Scheibenwischeranlage ist aus der DE-A 3 324 634 (bzw. FR-A 2 548 605) bekannt. Bei einer Scheibenwischeranlage dieser Art wird der Wischhebel während seiner Schwenkbewegung gegebenenfalls mehrfach radial ein- und ausgefahren, so daß auch Eckbereiche der Windschutzscheibe gereinigt werden. Die radiale Verstellbewegung des mit diesem Wischhebel verbundenen, in einem pendelnden Führungsgehäuse verschiebbar gelagerten Kolbens wird bei der bekannten Ausführung über ein Kurbelgetriebe mit einer Kurbel und einer daran angelenkten Schubstange aus der Drehbewegung einer am Führungsgehäuse gelagerten Welle abgeleitet, die außerhalb des Führungsgehäuses ein Ritzel trägt, das mit einem ortsfest angeordneten Zahnsegment kämmt. Das Führungsgehäuse selbst wird über eine Welle angetrieben, die in einer Lagerbuchse eines Tragrahmens beweglich geführt ist. Diese Antriebswelle greift in Verstellrichtung des Kolbens gesehen etwa mittig an dem Führungsgehäuse. Wird eine solche Scheibenwischeranlage in ein Kraftfahrzeug derart eingebaut, daß diese Antriebswelle nahe dem unteren Scheibenrand angeordnet ist, bewegt sich also der vordere Gehäuseabschnitt vor der Scheibe, während der hintere Gehäuseabschnitt im Motorraum hin- und herpendelt. Vorteilhaft ist dabei, daß nur etwa die Hälfte des Führungsgehäuses vor der zu reinigenden Scheibe liegt und damit nur in Ausnahmefällen die Sicht durch die Windschutzscheibe beeinträchtigt wird. Nachteilig ist allerdings, daß die andere Gehäusehälfte verhältnismäßig weit in den Motorraum eintaucht, so daß dort ausreichend Platz geschaffen werden muß. Dieser Platz steht aber nicht bei allen Fahrzeugtypen zur Verfügung.

Bei der bekannten Ausführung ist das Führungsgehäuse im wesentlichen symmetrisch zur Verstellrichtung des Kolbens aufgebaut, der also mittig in diesem Führungsgehäuse verschiebbar geführt ist und die Drehachse des Führungsgehäuses schneidet. Am freien Ende des Kolbens ist zentrisch der Wischhebel befestigt, wobei das Wischblatt genau in Längsrichtung des Kolbens ausgerichtet ist. Das Wischblatt endet dabei mit Abstand vor dem freien Ende des Kolbens, so daß zwischen der Drehachse des Führungsgehäuses und dem benachbarten Wischblattende ein verhältnismäßig großer ungewischter Bereich verbleibt. Diese im wesentlichen symmetrische Ausbildung des Führungsgehäuses und des Wischhebels kann bei manchen Fahrzeugen dazu führen, daß das Wischblatt auch in seiner Parkstellung verhältnismäßig weit in die zu reinigende Windschutzscheibe hineinragt, was vor allem aus stilistischen Gründen von manchem Kraftfahrzeug-Hersteller nicht hingenommen wird.

Aus der DE-A 3 447 438 ist eine Wischanlage bekannt, bei der der den Wischhebel führende Kolben nicht über ein Kurbelgetriebe mit einer Schubstange, sondern über ein sogenanntes Kreuz-Schleifengetriebe verstellbar ist. Auch bei dieser bekannten Ausführung ist davon auszugehen, daß die Verstellbewegung längs einer Geraden erfolgt, die die Drehachse des Führungsgehäuses schneidet und daher das in dieser Veröffentlichung nicht näher dargestellte Führungsgehäuse im wesentlichen symmetrisch ausgebildet ist.

Insgesamt ist also festzustellen, daß diese bekannten Ausführungen nicht bei allen Fahrzeugtypen einsetzbar sind.

Der vorliegenden Erfindung liegt also die Aufgabe zugrunde, eine Scheibenwischeranlage dieser Art (DE-A 3 324 634 bzw. FR-A 2 548 605) so weiterzubilden, daß sie auch bei beengten Einbauverhältnissen im Motorraum eines Kraftfahrzeuges einsetzbar ist. Das Wischfeld soll dabei natürlich dem derzeitigen Standard entsprechen oder möglichst noch vergrößert werden.

Diese Aufgabe wird erfindungsgemäß mit den kennzeichnenden Merkmalen des Anspruchs 1 gelöst.

Der vorliegenden Erfindung liegt dabei der Gedanke zugrunde, daß bei einem seitlichen Versatz der Kolbenachse relativ zur Drehachse des Führungsgehäuses auch das Führungsgehäuse asymmetrisch ausgebildet werden kann, so daß es nicht so weit in die Scheibe hineinragt wie das symmetrische Führungsgehäuse der bekannten Anlage.

Bei einer bevorzugten Ausführung verläuft der dem Kolben benachbarte Rand des Führungsgehäuses in geringem Abstand und vorzugsweise geradlinig parallel zum Kolben. Dieser im Vergleich zum Stand der Technik nahe an den Scheibenwischer herangezogene Rand des Führungsgehäuses ragt in der Parkstellung des Scheibenwischers nur unbeträchtlich in den Bereich der Windschutzscheibe hinein und in der Umkehrstellung des Wischblattes ragt das Führungsgehäuse mit diesem Rand nur geringfügig in den Motorraum hinein.

Bei bisher bekannten Hubwischeranlagen war — wie bereits erwähnt — das Wischblatt auf der Symmetrielängsachse des Kolbens angeordnet. Bei einer solchen Anordnung muß das Wischblatt zwangsläufig vor dem Kolben enden, was bei der erfindungsgemäßen Hubwischeranlage zu einem verhältnismäßig großen ungewischten Bereich zwischen Drehachse des Scheibenwischers und diesem Wischblattende führen würde. Zur Behebung dieses Nachteils wird von der symmetrischen Anordnung des Wischhebels bzw. des Wischblattes abgewichen und der Wischarm des Wischhebels in seinem Endbereich derart abgewinkelt, daß das Wischblatt seitlich neben dem Wischarm angeordnet ist. Damit kann man nun gegenüber bekannten Ausführungen das Wischblatt verlängern, so daß es in einem Bereich seitlich neben dem Führungsgehäuse endet. Bei einer bevorzugten Ausführung wird das Wischblatt bis in den Bereich der Drehachse des Führungsgehäuses verlängert. Eine solche Lösung ist dann vorteilhaft, wenn die Antriebswelle für das Führungsgehäuse in einem Durchbruch der zu reinigenden Windschutzscheibe steckt.

Gemäß einer bevorzugten Weiterbildung der Erfindung kann man den Bauraum des Führungsgehäuses im hinteren Abschnitt wesentlich verkleinern, wenn die Welle, aus der die Verstellbewegung des Kolbens abgeleitet wird, zwischen der Drehachse des Führungsgehäuses und dem vorderen Ende des Führungsgehäuses angeordnet wird. Damit wird zwar in der Regel der vordere Gehäuseabschnitt vergrößert, der hintere Gehäuseabschnitt des Führungsgehäuses aber so reduziert, daß auch bei beengten Platzverhältnissen ein Einbau in einem Kraftfahrzeug möglich ist.

Die Erfindung und deren vorteilhafte Ausgestaltungen werden nachstehend anhand der in der Zeichnung dargestellten Ausführungsbeispiele näher erläutert. Es zeigen:

Fig. 1 einen Längsschnitt durch das Führungsgehäuse einer üblichen, nicht erfindungsgemäß ausgebildeten Wischeranlage,

Fig. 2 den Einbau eines solchen Führungsgehäuses in ein Kraftfahrzeug,

Fig. 3 schematisch ein Ausführungsbeispiel einer Wischeranlage gemäß der Erfindung,

Fig. 4 ein anderes Ausführungsbeispiel und

Fig. 5 einen Schnitt entlang der Schnittlinie III–III.

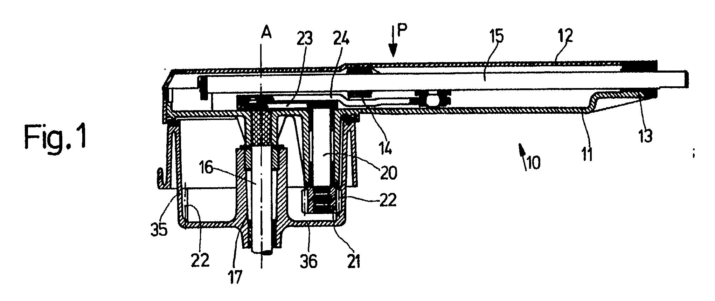

In Fig. 1 ist mit 10 ein Führungsgehäuse bezeichnet, zu dem eine formstabile Grundplatte 11 sowie eine Kunststoffabdeckhaube 12 gehört. An der Grundplatte 11 sind im Abstand voneinander zwei Lager 13 und 14 fixiert, in denen ein linear verstellbarer Kolben 15 geführt ist. Am vorderen, aus dem Führungsgehäuse 10 herausragenden Ende dieses Kolbens 15 kann in bekannter Weise das Befestigungsteil eines Wischarms fixiert werden. In der Grundplatte 11 ist drehfest eine Antriebswelle 16 fixiert, die in Lagern einer Lagerbuchse 17 drehbeweglich gelagert ist. Am freien Ende dieser Antriebswelle 16 greift in bekannter Weise ein von einem Elektromotor betätigtes Kreuzlenkergetriebe an, das in Fig. 1 nicht näher dargestellt ist. Über dieses Kreuzlenkergetriebe wird also die Antriebswelle 16 und damit auch das Führungsgehäuse um die Drehachse A pendelnd angetrieben.

Die lineare Verstellbewegung des Kolbens 15 wird über ein Kurbelgetriebe aus der Drehbewegung einer am Führungsgehäuse 10 drehbar gelagerten Welle 20 abgeleitet, die außerhalb des Führungsgehäuses ein Ritzel 21 trägt, das mit einem ortsfest angeordneten Zahnsegment 22 kämmt. Innerhalb des Führungsgehäuses sitzt an dieser Welle 20 drehfest eine Kurbel 23, an der eine Schubstange 24 angelenkt ist, deren anderes Ende zwischen den beiden Lagern 13 und 14 am Kolben 15 angreift.

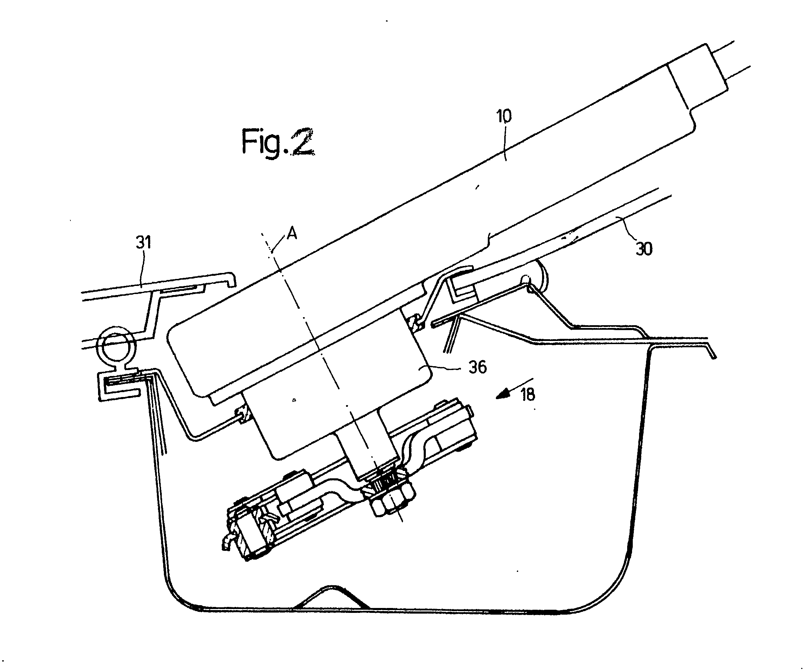

Insbesondere aus Fig. 1 geht hervor, daß diese Kurbelwelle 20 zwischen der Drehachse A des Führungsgehäuses 10 und dem vorderen, das Lager 13 haltenden Ende des Führungsgehäuses 10 angeordnet ist. Daraus ergibt sich andererseits, daß gegenüber den bekannten Anlagen der hintere Abschnitt des Führungsgehäuses verkleinert werden konnte und die Antriebswelle 16 nun nahe dem hinteren Ende des Führungsgehäuses und nicht etwa mittig am Führungsgehäuse angreift. In Fig. 2 ist der Einbau einer derart ausgebildeten Wischeranlage in einem Kraftfahrzeug angedeutet, wobei mit 30 die zu reinigende Scheibe und mit 31 der Motorraumdeckel bezeichnet sind. Man erkennt aus dieser Darstellung in Fig. 2, daß links der Drehachse A nur ein verhältnismäßig kleiner Einbauraum benötigt wird. Andererseits erkennt man aus Fig. 2 aber auch, daß der vordere Abschnitt des Führungsgehäuses 10 verhältnismäßig weit in den Bereich der zu reinigenden Windschutzscheibe 30 hineinragt, was für später erläuterte Weiterbildungen von Bedeutung ist.

Aufgrund der Anordnung der Welle 20 mit dem Ritzel 21 besteht nun die Möglichkeit, das feststehende Zahnsegment 22 als kreisrunden, innenverzahnten Ring auszubilden. Gegenüber bekannten Ausführungen mit nur einem halbrunden Zahnsegment hat diese Ausführung den Vorteil einer größeren Stabilität und Genauigkeit, was sich günstig auf die Laufeigenschaften und insbesondere auf das Geräuschverhalten auswirkt. Dieses Zahnsegment 22 ist einstückig in die Mantelfläche 35 eines im wesentlichen topfförmigen Tragrahmens 36 eingearbeit, an dem einstückig auch die Lagerbuchse 17 angeformt ist. Durch diese einstückige Ausbildung von Lagerbuchse 17 und Zahnsegment 22 wird ebenfalls die Laufruhe gegenüber bekannten Anlagen verbessert, bei denen das Zahnsegment als separates Teil an einem Tragrahmen befestigt war. Außerdem werden durch diese Maßnahmen Kosten eingespart.

Im Interesse einer spielfreien Führung des Kolbens 15 sind die beiden Lager 13 und 14 an demselben Teil, nämlich der Grundplatte 11 formstabil festgelegt. Das hintere, der Drehachse A des Führungsgehäuses 10 naheliegende Lager 14 ist dabei an einem Lagerbock ausgebildet, der zwei V-förmig aufeinander zulaufende Schenkel aufweist, deren Enden an der Grundplatte 11 festgeschraubt sind. Das Lager 14 befindet sich am Übergang zwischen den beiden Schenkeln also etwa mittig am Lagerbock. Wenigstens in diesem Bereich verläuft der Lagerbock mit Abstand von der Grundplatte 11, damit Raum für die unter diesem Lager 14 hindurchragende Schubstange 24 verbleibt.

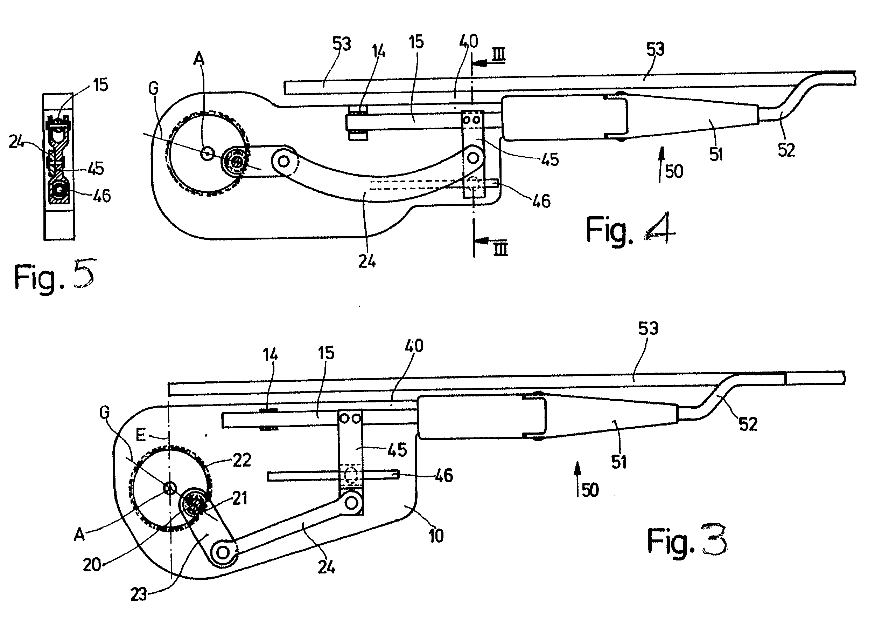

Fig. 3 zeigt ein Ausführungsbeispiel der Erfindung, wobei wiederum die Welle mit dem Ritzel 21 zwischen der Drehachse A des Führungsgehäuses 10 und dem wischarmseitigen Endabschnitt des Führungsgehäuses 10 angeordnet ist. Wesentlich bei dieser Ausführung ist, daß der Kolben 15 die Drehachse A des Führungsgehäuses 10 nicht schneidet, sondern im Abstand seitlich versetzt dazu geführt ist. Der diesem Kolben 15 benachbarte Rand 40 des Führungsgehäuses 10 kann dann geradlinig ausgebildet und in geringem Abstand zu diesem Kolben 15 angeordnet werden. Dies ist möglich, weil gewissermaßen der Antrieb für diesen Kolben 15 nicht symmetrisch, sondern auf eine Seite des Kolbens hin verlagert wurde. Man erkennt aus Fig. 3, daß zwischen den beiden Lagern 13 und 14 vom Kolben 15 radial ein Auslegerarm 45 absteht, der in einer Führungsschiene 46 geführt wird. Im Unterschied zu der Ausführung nach der Fig. 1 greift nun die Schubstange 24 an diesem Auslegerarm 45, und nicht unmittelbar an dem Kolben 15 an. Dabei zeigt Fig. 3 ein Ausführungsbeispiel, bei dem dieser Auslegerarm 45 zwischen der Anlenkstelle der Schubstange 24 und dem Kolben 15 an der Führungsschiene 46 geführt ist, während bei der Ausführung nach Fig. 4 die Schubstange 24 mittig zwischen Kolben 15 und der Führungsschiene 46 an diesem Auslegerarm 45 angelenkt ist. Bei dieser Ausführung nach Fig. 4 ist die Schubstange 24 bogenförmig ausgebildet, das heißt, sie hat allgemein gesehen zwischen ihren beiden Anlenkpunkten eine von dem Kolben 15 wegzeigende Auswölbung, damit ein ausreichender Bewegungsspielraum für diese Schubstange 24 ohne Gefahr der Kollision mit dem Lager 14 gegeben ist.

Aus den Fig. 3 und 4 ist weiter noch ersichtlich, daß die Welle 20 und die Drehachse A des Führungsgehäuses 10 auf einer Geraden G liegen, die im Winkel zur Verstellrichtung des Kolbens 15 ausgerichtet ist. Auch diese Maßnahme trägt dazu bei, daß ein ausreichender Bewegungsspielraum für die Schubstange 24 verbleibt und dennoch das Führungsgehäuse raumsparend ausgebildet werden kann.

Insgesamt ist also festzustellen, daß durch die Verlagerung der Welle 20 und/oder durch die Verlagerung des Kolbens 15 und in Verbindung damit durch die Verlagerung des Anlenkpunktes der Schubstange 24 gegenüber den bekannten Ausführungen ein raumsparendes Führungsgehäuse 10 geschaffen ist, das auch bei beengten Platzverhältnissen in bestimmten Kraftfahrzeugtypen verwendbar ist und dennoch die Durchsicht durch die Windschutzscheibe nur wenig beeinträchtigt.

In den Fig. 3 und 4 ist auch der Wischhebel 50 der Scheibenwischeranlage dargestellt, zu dem ein Wischarm 51 mit einer Wischstange 52 sowie ein Wischblatt 53 gehört. Die Wischstange ist in ihrem vorderen Endabschnitt zweifach derart abgewinkelt, daß das Wischblatt 53 seitlich neben dem Wischarm 51 angeordnet ist. Diese Ausbildung des Wischhebels 50 ist an sich bekannt, wurde aber bisher nicht bei sogenannten Hubwischeranlagen eingesetzt. Aufgrund dieser Ausbildung des Wischhebels kann man nun bei einer Hubwischeranlage das Wischblatt gegenüber bekannten Ausführungen verlängern, so daß es in einem Bereich seitlich neben dem Führungsgehäuse 10 endet. Fig. 4 zeigt eine Ausführung, bei der dieses Wischblatt 53 etwa mittig zwischen der Drehachse A und dem hinteren Lager 14 endet. Bei der Ausführung nach Fig. 3 endet das Wischblatt nahe einer durch die Drehachse A des Führungsgehäuses 10 senkrecht zur Verstellrichtung des Kolbens 15 gedachten Ebene E. Das Wischblatt 53 bei dieser Ausführung nach Fig. 3 endet also möglichst nahe an der Drehachse A des Führungsgehäuses 10, wodurch das Wischfeld gegenüber bekannten Ausführungen vergrößert werden kann.

Während also bei der Ausführung nach der Fig. 1 das Führungsgehäuse - wie an sich bekannt - gewissermaßen symmetrisch zur Kolbenlängsachse ausgebildet ist, sind die Führungsgehäuse nach den Fig. 3 und 4 unsymmetrisch derart ausgebildet, daß das Wischblatt nahe am Kolben 15 geführt wird und insbesondere auch nahe an die Drehachse A heranreicht. Diese unsymmetrische Ausbildung des Führungsgehäuses 10 erfordert keinen größeren Raumbedarf, bei manchen Kraftfahrzeugtypen kann sogar eine solche Scheibenwischeranlage besser untergebracht werden.

## Patentansprüche

1. Scheibenwischeranlage, insbesondere für Kraftfahrzeuge, mit einem um eine Drehachse (A) pendelnd angetriebenen Führungsgehäuse (10) für einen darin linear verstellbaren Kolben (15) an dessen aus dem vorderen Ende des Führungsgehäuses (10) herausragenden Endabschnitt ein Wischhebel befestigbar ist, wobei die Verstellbewegung des Kolbens (15) über ein Kurbelgetriebe (21 bis 24) mit einer Kurbel (23) und einer daran angelenkten Schubstange (24) aus der Drehbewegung einer am Führungsgehäuse (10) drehbar gelagerten an der Kurbel (23) fixierten Welle (20) abgeleitet wird, die außerhalb des Führungsgehäuses (10) ein Ritzel (21) trägt, das mit einem ortsfest angeordneten Zahnsegment (22) kämmt, dadurch gekennzeichnet, daß der Kolben (15) seitlich im Abstand zur Drehachse (A) des Führungsgehäuses (10) geführt ist.

2. Scheibenwischeranlage nach Anspruch 1, dadurch gekennzeichnet, daß der dem Kolben (15) benachbarte Rand (40) des Führungsgehäuses (10) vorzugsweise in geringem Abstand geradlinig parallel zum Kolben (15) verläuft.

3. Scheibenwischeranlage nach Anspruch 1 oder 2, dadurch gekennzeichnet, daß der Kolben (15) in zwei im Abstand voneinander angeordneten Lagern (13, 14) geführt ist und daß zwischen diesen beiden Lagern (13, 14) vom Kolben radial ein Auslegerarm (45) absteht, der an einer Führungsschiene (46) geführt ist.

4. Scheibenwischeranlage nach Anspruch 3, dadurch gekennzeichnet, daß die zum Kurbelgetriebe gehörende Schubstange (24) an dem Auslegerarm (45) angreift.

5. Scheibenwischeranlage nach Anspruch 4, dadurch gekennzeichnet, daß die Schubstange (24) vorzugsweise mittig zwischen Kolben (15) und Führungsschiene (46) am Auslegerarm (45) angelenkt ist.

6. Scheibenwischeranlage nach Anspruch 4, dadurch gekennzeichnet, daß der Auslegerarm (45) zwischen der Anlenkstelle der Schubstange (24) und dem Kolben (15) an der Führungsschiene (46) geführt ist.

7. Scheibenwischeranlage nach einem der Ansprüche 1 bis 6, dadurch gekennzeichnet, daß die Schubstange (24) zwischen ihren beiden Anlenkpunkten eine von dem Kolben (15) wegzeigende Auswölbung aufweist.

8. Scheibenwischeranlage nach Anspruch 7, dadurch gekennzeichnet, daß die Schubstange (24) bogenförmig ausgebildet ist.

9. Scheibenwischeranlage nach einem der vorhergehenden Ansprüche, dadurch gekennzeichnet, daß die Welle (20) und die Drehachse (A) des Führungsgehäuses (10) auf einer Geraden (G) liegen, die im Winkel zur Verstellrichtung des Kolbens (15) ausgerichtet ist.

10. Scheibenwischeranlage nach einem der vorhergehenden Ansprüche, dadurch gekennzeichnet, daß zu dem am Kolben (15) befestigten Wischhebel (50) ein Wischarm (51) und ein Wischblatt (53) gehört, wobei der Wischarm (51) und/oder dessen Wischstange (52) vorzugsweise an seinem Endbereich derart abgewinkelt ist, daß das Wischblatt (53) seitlich neben dem Wischarm (51) angeordnet ist.

11. Scheibenwischeranlage nach Anspruch 10, dadurch gekennzeichnet, daß das Wischblatt (53) in einem Bereich seitlich neben dem Führungsgehäuse (10) endet.

12. Scheibenwischeranlage nach Anspruch 10, dadurch gekennzeichnet, daß das Wischblatt (53) nahe einer durch die Drehachse (A) des Führungsgehäuses (10) senkrecht zur Verstellrichtung des Kolbens (15) gedachten Ebene (E) endet.

13. Scheibenwischeranlage nach einem der Ansprüche 10 bis 12, dadurch gekennzeichnet, daß das Führungsgehäuse (10) in dem dem Wischblatt (53) benachbarten Bereich eine gerade, zum Wischblatt (53) parallel verlaufende Außenwand (40) aufweist.

14. Scheibenwischeranlage nach einem der vorhergehenden Ansprüche dadurch gekennzeichnet, daß die Welle (20) zwischen der Drehachse (A) des Führungsgehäuses (10) und dem vorderen Ende des Führungsgehäuses (10) angeordnet ist.

15. Scheibenwischeranlage nach Anspruch 14, dadurch gekennzeichnet, daß das Zahnsegment (22) als kreisrunder, innenverzahnter Ring ausgebildet ist.

16. Scheibenwischeranlage nach Anspruch 15, dadurch gekennzeichnet, daß das Zahnsegment (22) einstückig mit einer Lagerbuchse (17) für eine das Führungsgehäuse (10) antreibende Antriebswelle (16) an der inneren Mantelfläche eines im wesentlichen topfförmigen Tragrahmens (36) ausgebildet ist.

17. Scheibenwischeranlage nach einem der vorhergehenden Ansprüche, dadurch gekennzeichnet, daß das Führungsgehäuse (10) zweiteilig aus einer Grundplatte (11) und einer Abdeckhaube (12) aufgebaut ist und daß der Kolben (15) in zwei im Abstand voneinander angeordneten Lagern (13, 14) geführt ist, die beide an der Grundplatte (11) fixiert sind.

18. Scheibenwischeranlage nach Anspruch 17, dadurch gekennzeichnet, daß die zum Kurbelgetriebe gehörende Schubstange (24) zwischen den beiden Lagern (13, 14) auf den Kolben (15) einwirkt.

19. Scheibenwischeranlage nach Anspruch 18, dadurch gekennzeichnet, daß das hintere, der Drehachse (A) des Führungsgehäuses (10) naheliegende Lager (14) wenigstens annähernd mittig an einem Lagerbock (40) ausgebildet ist, der an seinen Enden an der Grundplatte (10) fixiert, vorzugsweise festgeschraubt ist.

20. Scheibenwischeranlage nach Anspruch 3, dadurch gekennzeichnet, daß die Führungsschiene (46) an der Grundplatte (11) des Führungsgehäuses (10) fixiert, vorzugsweise festgeschraubt ist.

**Revendications**

1. Installation d'essuie-glace, notamment pour véhicules automobiles, comportant un carter de guidage (10), qui est entraîné selon un mouvement oscillatoire autour d'un axe de rotation (A) et sert à guider un piston (15) déplaçable linéairement dans ce carter, et dans lequel un bras-balai peut être fixé à la section d'extrémité de ce piston, qui fait saillie hors de l'extrémité avant du carter de guidage (10), et dans lequel le déplacement du piston (15) est dérivé, par l'intermédiaire d'un mécanisme à manivelle (21 à 24) comportant une manivelle (23) et un poussoir (24) articulé sur cette manivelle, à partir du mouvement de rotation d'un arbre (20), qui monte de manière à pouvoir tourner sur le carter de guidage (10), est fixé à la manivelle (23) et porte, à l'extérieur du carter de guidage (10), un pignon (21), qui engrène avec un secteur denté (22) monté fixe, caractérisée en ce que le piston (15) est guidé latéralement à une certaine distance de l'axe de rotation (A) du carter de guidage (10).

2. Installation d'essuie-glace selon la revendication 1, caractérisée en ce que le bord (40), voisin du piston (15), du carter de guidage (10) s'étend de préférence avec une forme rectiligne en étant disposé à une faible distance parallèlement au piston (15).

3. Installation d'essuie-glace selon la revendication 1 ou 2, caractérisée en ce que le piston (15) est guidé dans deux paliers (13, 14) distants l'un de l'autre et qu'entre ces deux paliers (13, 14) s'étend un bras en console (45), qui ressort radialement par rapport au piston et est guidé sur une glissière (46).

4. Installation d'essuie-glace selon la revendication 3, caractérisée en ce que le poussoir (24), qui fait partie du mécanisme à manivelle, s'accroche au bras en console (45).

5. Installation d'essuie-glace suivant la revendication 4, caractérisée par le fait que le poussoir (24) est articulé sur le bras en console (45) de préférence dans une position médiane entre le piston (15) et la glissière (46).

6. Installation d'essuie-glace selon la revendication 4, caractérisée en ce que le bras en console (45) est guidé sur la glissière (46) entre le point d'articulation du poussoir (24) et le piston (15).

7. Installation d'essuie-glace selon l'une des revendications 1 à 6, caractérisée en ce que le poussoir (24) comporte, entre ses deux points d'articulation, une forme incurvée, dont la convexité est tournée à l'opposé du piston (15).

8. Installation d'essuie-glace selon la revendication 7, caractérisée en ce que le poussoir (24) possède une forme en arc de cercle.

9. Installation d'essuie-glace selon l'une des revendications précédentes, caractérisée en ce que l'arbre (20) et l'axe de rotation (A) du carter de guidage (10) sont situés sur une droite (G), qui fait un certain angle par rapport à la direction de déplacement du piston (15).

10. Installation d'essuie-glace selon l'une des revendications précédentes, caractérisée en ce qu'un bras d'essuie-glace (51) et une raclette d'essuie-glace (53) font partie du bras-balai (50) fixé au piston (15), le bras d'essuie-glace (51) et/ou sa tige (52) étant de préférence coudés au niveau de cette zone d'extrémité de sorte que la raclette (53) est disposée latéralement à côté du bras d'essuie-glace (51).

11. Installation d'essuie-glace selon la revendication 10, caractérisée en ce que la raclette d'essuie- glace (53) se termine dans une zone située latéralement à côté du carter de guidage (10).

12. Installation d'essuie-glace selon la revendication 10, caractérisée en ce que la raclette (53) se termine à proximité d'un plan imaginaire (E) passant par l'axe de rotation (A) du carter de guidage (17) et perpendiculaire à la direction de déplacement du piston (15).

13. Installation d'essuie-glace selon les revendications 10 à 12, caractérisée en ce que le carter de guidage (10) comporte, dans la zone voisine de la raclette (53), une paroi extérieure (40) parallèle à la raclette.

14. Installation d'essuie-glace selon l'une des revendications précédentes, caractérisée en ce que l'arbre (20) est situé entre l'axe de rotation (A) du carter de guidage (10) et l'extrémité avant de ce dernier.

15. Installation d'essuie-glace selon la revendication 14, caractérisée en ce que le secteur denté (22) est agencé sous la forme d'une bague circulaire portant une denture intérieure.

16. Installation d'essuie-glace selon la revendication 15, caractérisée en ce que le secteur denté (22) est réalisé d'un seul tenant avec un logement de paliers (17) prévu pour un arbre d'entraînement (16) entraînant le carter de guidage (10), sur la surface enveloppe intérieure d'un cadre de support (36) sensiblement en forme de pot.

17. Installation d'essuie-glace selon l'une des revendications précédentes, caractérisée en ce que le carter de guidage (10) est formé de deux éléments incluant une plaque de base (11) et un capot de revêtement (12), et que le piston (15) est guidé dans deux paliers (13, 14), qui sont distants l'un de l'autre et sont tous deux fixés sur la plaque de base (11).

18. Installation d'essuie-glace selon la revendication 17, caractérisée en ce que le poussoir (24), qui fait partie du mécanisme à manivelle, agit sur le piston (15), entre les deux paliers (13, 14).

19. Installation d'essuie-glace selon la revendication 18, caractérisée en ce que le palier arrière (14), qui est proche de l'axe de rotation (A) du carter de guidage (10), est disposé au moins approximativement en position médiane sur un support de palier (40), dont les extrémités sont fixées, de préférence par vissage, à la plaque de base (10).

20. Installation d'essuie-glace suivant la revendication 3, caractérisée en ce que la glissière (46) est fixée, de préférence par vissage, à la plaque de base (11) du carter de base (10).

## Claims

1. A windshield wiper system, especially for motor vehicles, comprising a guide housing (10) for a piston (15) which is linearly displaceable therein and which guide housing is driven in pendulum fashion about an axis of rotation (A), onto the end portion of which piston protruding from the front end of the guide housing (10) may be attached a wiper arm-and-blade assembly, wherein the adjusting motion of the piston (15) is derived via a crank gear (21 to 24) comprising a crank (23) and a push rod (24) articulated thereon from the rotation of a shaft (20) rotatably mounted on the guide housing (10), which shaft carries a pinion (21) outside the guide housing (10) which pinion meshes with a stationary toothed segment (22), characterized in that the piston (15) is guided with a lateral spacing from the axis of rotation (A) of the guide housing (10).

2. A windshield wiper system according to claim 1, characterized in that the rim (40) of the guide housing (10) adjacent to the piston (15) extends preferably linearly parallel with a small spacing to the piston (15).

3. A windshield wiper system according to claim 1 or 2, characterized in that the piston (15) is guided in two bearings (13, 14) arranged with a spacing from each other and that between the said two bearings an extension arm (45) projects laterally from the piston, which extension arm is guided on a guide rail (46).

4. A windshield wiper system according to claim 3, characterized in that the push rod (24) being part of the crank gear acts upon the extension arm (45).

5. A windshield wiper system according to claim 4, characterized in that the push rod (24) is preferably centrally articulated on the extension arm (45) between piston (15) and guide rail (46).

6. A windshield wiper system according to claim 4, characterized in that the extension arm (45) is guided on the guide rail (46) between the point of articulation of the push rod (24) and the piston (15).

7. A windshield wiper system according to any one of claims 1 to 6, characterized in that between its two points of articulation the push rod (24) comprises a bulge pointing in a direction away from the piston (15).

8. A windshield wiper system according to claim 7, characterized in that the push rod (24) is formed in an arc-shaped manner.

9. A windshield wiper system according to any one of preceding claims, characterized in that the shaft (20) and the axis of rotation (A) of the guide housing (10) are positioned on a straight line (G) which is adjusted at an angle to the direction of displacement of the piston (15).

10. A windshield wiper system according to any one of the preceding claims, characterized in that the wiper arm-and-blade assembly (50) fixed on the piston (15) includes a wiper arm (51) and a wiper blade (53), wherein the wiper arm (51) and/or its wiper rod (52) is in its end area preferably bent in such a way that the wiper blade (53) is arranged laterally beside the wiper arm (51).

11. A windshield wiper system according to claim 10, characterized in that the wiper blade ends in an area laterally beside the guide housing (10).

12. A windshield wiper system according to claim 10, characterized in that the wiper blade (53) ends closely to an imagined plane (E) through the axis of rotation (A) of the guide housing (10) perpendicularly to the direction of displacement of the piston (15).

13. A windshield wiper system according to at least any one of claims 10 to 12, characterized in that the area adjacent to the wiper blade (53) the guide housing (10) has a straight-lined outer wall (40) extending in parallel to the wiper blade (53).

14. A windshield wiper system according to any one of the preceding claims, characterized in that the shaft (20) is arranged between the axis of rotation (A) of the guide housing (10) and the front end of the guide housing (10).

15. A windshield wiper system according to claim 14, characterized in that the gear segment (22) is formed as a circular, internally toothed ring.

16. A windshield wiper system according to claim 15, characterized in that onto the interior generated surface of a substantially cup-shaped supporting frame (36) the toothed segment (22) is integrally formed with a bearing bush (17) for a drive shaft (16) driving the guide housing (10).

17. A windshield wiper system according to any one of the preceding claims, characterized in that the guide housing (10) is made of two parts, a base plate (11) and a guard cover (12) and that the piston (15) is guided in two bearings (13, 14) spaced from each other and fixed to the base plate (11) both.

18. A windshield wiper system according to claim 17, characterized in that that the push rod (24) being part of the crank gear acts upon the piston (15) between the two bearings (13, 14).

19. A windshield wiper system according to claim 18, characterized in that the rear bearing (14) located closely to the axis of rotation (A) of the guide housing (10) is at least substantially centrally formed on a pillow block (40) which is fixed, preferably screwed, onto the base plate (10) by its ends.

20. A windshield wiper system according to claim 3, characterized in that the guide rail (46) is fixed, preferably screwed, onto the base plate (10) of the guide housing (11).

Fig.1

EP 0 254 242 B1

Fig.2

EP 0 254 242 B1

Fig. 5

Fig. 4

Fig. 3

EP 0 254 242 B1